# EUROPÄISCHE PATENTSCHRIFT

(11) **EP 0 563 575 B1**
(45) Veröffentlichungstag und Bekanntmachung des Hinweises auf die Patenterteilung: **27.09.1995**
(21) Anmeldenummer: 93103013.4
(22) Anmeldetag: 26.02.1993
(51) Int. Cl.: B29C 49/00, B29C 47/12, B29C 47/06

(54) **Verfahren und Vorrichtung zur fortlaufenden Herstellung eines Verbundrohres mit Rohr-Muffe**
Method and apparatus for continuous production of a composite pipe with sleeve
Procédé et dispositif de production en continu d'un tube composite avec manchon

(30) Priorität: 31.03.1992 DE 4210482
(43) Veröffentlichungstag der Anmeldung: 06.10.1993
(73) Patentinhaber: Hegler, Wilhelm, D-97688 Bad Kissingen (DE)
(72) Erfinder: Hegler, Ralph-Peter, Dr., W-8730 Bad Kissingen (DE); Hegler, Wilhelm, W-8730 Bad Kissingen (DE)
(74) Vertreter: Rau, Manfred, Dr. Dipl.-Ing.

(56) Entgegenhaltungen:
- WO-A-85/02144
- WO-A-88/05377
- WO-A-90/14208
- DE-A- 2 403 618
- FR-A- 2 264 649
- US-A- 4 846 660

## Beschreibung

Die Erfindung betrifft ein Verfahren nach dem Oberbegriff des Anspru-Oberbegriff des Anspruches 3.

Aus der EP 0 108 598 B1 ist ein Verfahren und eine Vorrichtung zur Herstellung eines Verbundrohres der gattungsgemäßen Art bekannt, bei dem der Außen-Schlauch von innen mit Druckgas beaufschlagt und hierdurch in ringförmige Formausnehmungen der Halbkokillen gedrückt wird. Der Innen-Schlauch wird über die Wandung einer Temperierglocke gegen die Wellung des Außen-Schlauches gedrückt und hiermit verschweißt. Zur Bildung einer Rohr-Muffe im fortlaufenden Rohrstrang wird der Außen-Schlauch in eine zylindrische glattflächige Muffen-Ausnehmung in den Halbkokillen gedrückt. Der Innen-Schlauch wird mit entsprechendem Abstand parallel geformt. Anschließend wird - solange Innen-Schlauch und Außen-Schlauch noch warmplastisch sind - einer der beiden Schläuche durchstochen und dann von innen mechanischer Druck gegen den Innen-Schlauch ausgeübt, so daß dieser gegen den Außen-Schlauch gedrückt und mit diesem verschweißt wird. Der konstruktive Aufwand einer solchen Vorrichtung ist beträchtlich. Darüber hinaus hat die Praxis gezeigt, daß hierdurch eine zuverlässige Verschweißung und eine maßgenaue Herstellung einer Rohr-Muffe nicht möglich ist.

Aus der PCT WO 90/14208 ist ein Verfahren zur Herstellung von Verbundrohren bekannt, wobei ein Außen-Schlauch in ringförmige Formausnehmungen der Halbkokillen gedrückt wird, ohne daß dies im einzelnen angegeben wird. Ein Innen-Schlauch wird mittels auf seine Innenseite ausgeübten Teil-Vakuums an einer Temperierglocke gehalten und mit dem Außen-Schlauch in bekannter Weise verschweißt. Zur Herstellung von Muffen wird der Innen-Schlauch mit Druckgas aus einem stromabwärts von einer Innen-Düse befindlichen Gas-Kanal beaufschlagt und vollflächig gegen den Außen-Schlauch gedrückt und mit diesem verschweißt. Eine definierte Verbindung zwischen Innen- und Außen-Schlauch ist hierbei nicht sichergestellt.

Aus der EP 0 385 465 A2 ist ein Verfahren zur Herstellung von Verbundrohren mit angeformter Muffe bekannt, wobei ein normales gewelltes Verbundrohr an einem Ende zu einer Muffe aufgeweitet wird und wobei die Wellung am anderen Ende zu einem Spitzende reduziert wird.

Aus der PCT WO 88/05377 ist ein gattungsgemäßes Verfahren und eine gattungsgemäße Vorrichtung zur Herstellung eines Verbundrohres mit angeformter Muffe bekannt, bei dem ein Außen-Schlauch mittels Teil-Vakuum in die ringförmigen Formausnehmungen der Halbkokillen gezogen wird und bei dem ein Innen-Schlauch abschnittsweise mit dem gewellten Außen-Schlauch verschweißt wird. Zur Bildung einer Rohr-Muffe ist in mindestens einem Paar von Halbkokillen eine Muffen-Ausnehmung ausgebildet, in die der Außen-Schlauch eingesaugt wird. Der Innen-Schlauch wird, wenn der Außen-Schlauch bereits vollständig zu einer Rohr-Muffe ausgeformt ist, mittels Druckluft gegen den Außen-Schlauch gepreßt und mit diesem verschweißt. Hierzu ist eine Temperierglocke in erheblichem Abstand hinter einer den Innen-Schlauch extrudierenden Innen-Düse mit einem ringförmigen Gas-Kanal versehen. Dieser wird mit Druckgas beaufschlagt, wenn sich die gesamte aus dem Außen-Schlauch bereits ausgeformte Rohr-Muffe und der hierzu zu verformende Abschnitt des Innen-Schlauches auf der Temperierglocke befinden. Durch diese Ausgestaltung ist nicht sichergestellt, daß die Verschweißung von Innen-Schlauch und Außen-Schlauch im Bereich der Rohr-Muffe zuverlässig durchgeführt wird.

Der Erfindung liegt die Aufgabe zugrunde, ein Verfahren und eine Vorrichtung zur fortlaufenden Herstellung von Verbundrohren mit Rohr-Muffen zu schaffen, wodurch eine hohe Festigkeit der Rohr-Muffe mit geringem Aufwand gewährleistet ist.

Diese Aufgabe wird erfindungsgemäß durch die Merkmale des Anspruches 1 gelöst. Durch die Kombination, daß einerseits in den Raum zwischen Außen-Schlauch und Innen-Schlauch während der Herstellung des normalen gewellten Verbundrohres Gas mit leichtem Überdruck gegenüber Atmosphärendruck eingeblasen wird, während dieser Raum während der Aufweitung von Außen-Schlauch und Innen-Schlauch zur Rohr-Muffe entlüftet wird, wobei das Andrücken des Innen-Schlauches gegen den Außen-Schlauch im Muffenbereich durch Druckbeaufschlagung von der Innenseite des Innen-Schlauches her geschieht, wird sichergestellt, daß eine vollflächige Verschweißung von Innen-Schlauch und Außen-Schlauch erreicht wird. Dies ist besonders wichtig, weil an die Rohr-Muffen besonders hohe Festigkeits-Anforderungen gestellt werden, die besonders schwer zu erfüllen sind, weil im Bereich der Rohr-Muffe das Rohr nicht die hohe Festigkeit und Steifigkeit aus der gewellten Ausbildung als Verbundrohr bezieht.

Durch die Weiterbildung nach Anspruch 2 kann die Gesamt-Wandstärke im Bereich der Rohr-Muffe gegenüber dem normalen gewellten Verbundrohr erhöht werden, wobei diese Maßnahme an sich aus der PCT WO 88/05377 bekannt ist.

Die erfindungsgemäßen Maßnahmen nach Anspruch 3 stellen sicher, daß das erfindungsgemäße Verfahren mit einfachen Maßnahmen zuverlässig ausgeführt wird. Die weiteren Unteransprüche geben vorteilhafte und zum Teil erfinderische Ausgestaltungen der erfindungsgemäßen Vorrichtung wieder. Die voneinander unabhängige Verstellbarkeit der Düsenweiten nach Anspruch 7 ermöglicht es, unterschiedliche Wanddicken des Außenrohres und des Innenrohres zu fahren und diese Wanddicken je nach Anwendungsbereich des herzustellenden Rohres zu verändern. Wird z.B. ein Rohr gefordert, das hohen Außendrücken standhalten muß, so ist die Wanddicke des Außenrohres höher zu wählen; ist das Rohr hohen Abriebsbelastungen von innen ausgesetzt, so muß das Innenrohr dickwandiger ausgebildet werden. Durch die Ausgestaltung nach Anspruch 8 und insbesondere die nach Anspruch 9 wird sichergestellt, daß beim Verstellen der Düsenweite zwischen dem zugeordneten Teil des Spritzkopfes und dem Düsenring keine Reibungskräfte auftreten, da der Düsenring gegenüber dem Spritzkopf nicht gedreht werden muß. Lediglich die nachgeordnete Düsenringmutter wird verdreht. Hierbei sollte an der Verbindungsstelle der Drehverbindung, also in der Innennut, ein hochtemperaturfestes Gleitmittel angeordnet sein. Die Maßnahmen nach den Ansprüchen 7 bis 10 und insbesondere die Maßnahmen nach den Ansprüchen 8 bis 10 sind auch unabhängig von den nach den Ansprüchen 1 bis 6 bei Vorrichtungen zur Herstellung von Verbundrohren ohne Muffen einsetzbar.

Weitere Merkmale, Einzelheiten und Vorteile der Erfindung ergeben sich aus der nachfolgenden Beschreibung von Ausführungsbeispielen anhand der Zeichnung. Es zeigt
- Fig. 1: eine Draufsicht auf eine Vorrichtung zur Herstellung von Kunststoff-Verbundrohren,
- Fig. 2: einen vertikalen Längsschnitt durch den Spritzkopf der Vorrichtung,
- Fig. 3: einen Längsschnitt durch einen Teil des Spritzkopfes zu Beginn der Herstellung einer Rohr-Muffe an einem Verbundrohr,
- Fig. 4: eine Darstellung gemäß Fig. 3 am Ende der Herstellung der Rohr-Muffe,
- Fig. 5: einen Innen-Düsenring mit Innen-Düsenringmutter zu Beginn ihrer Montage,
- Fig. 6: den Innen-Düsenring und die Innen-Düsenringmutter nach ihrem Zusammensetzen,
- Fig. 7: einen Querschnitt durch eine Halbkokille im Bereich einer Muffen-Ausnehmung,
- Fig. 8: eine Teil-Ansicht eines an einer Halbkokille angebrachten Schaltgliedes im Zusammenwirken mit Schaltern entsprechend dem Sichtpfeil VIII in Fig. 3,
- Fig. 9: einen Schnitt durch Fig. 8 entsprechend der Schnittlinie IX-IX in Fig. 8,
- Fig. 10: eine abgewandelte Ausführungsform einer Vorrichtung mit einer Ausnehmung zur Herstellung eines Spitzendes an einem Verbundrohr,
- Fig. 11: ein Verbundrohr, in dem einerseits ein Spitzende und andererseits eine Rohr-Muffe fortlaufend hergestellt sind,
- Fig. 12: ein Verbundrohr, in dem eine Rohr-Muffe und eine Doppelmuffe ausgebildet sind und
- Fig. 13: eine Rohrverbindung mit einer erfindungsgemäß ausgebildeten Rohr-Muffe.

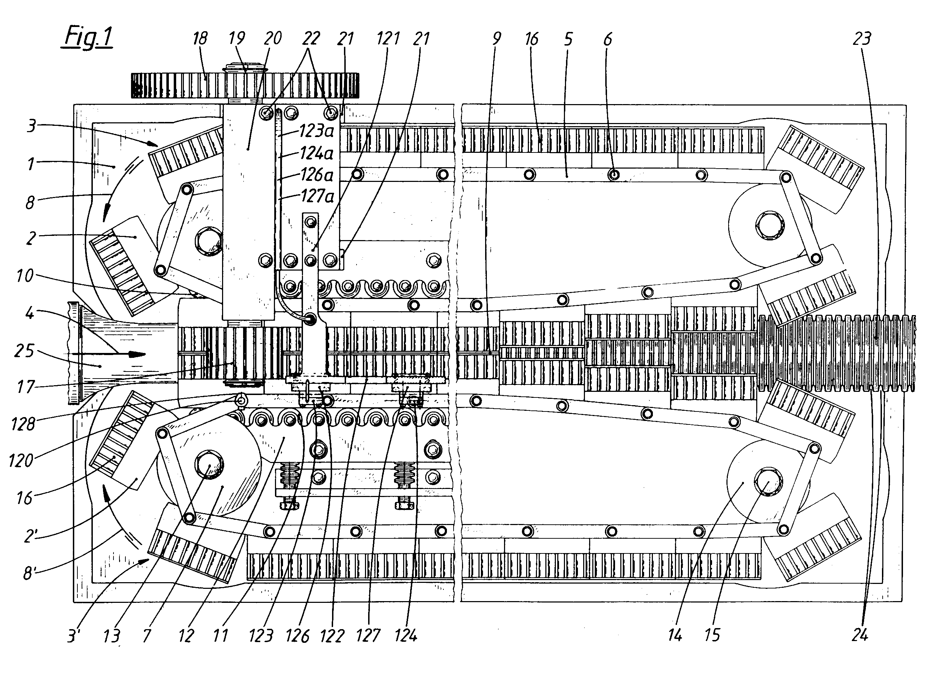

Wie Fig. 1 erkennen läßt, weist eine Vorrichtung zur Herstellung von Kunststoff-Verbundrohren mit Querrillen einen Maschinentisch 1 auf, auf dem Halbkokillen 2 bzw. 2' angeordnet sind, die jeweils zu zwei sogenannten Ketten 3 bzw. 3' miteinander verbunden sind. Hierzu ist an jeder Halbkokille 2 bzw. 2' in ihrem außenliegenden, in Produktionsrichtung 4 vorderen Bereich eine Lasche 5 mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3, 3' sind an ihrem in Produktionsrichtung 4 gesehen rückwärtigen Ende über als sogenannte Einlaufrollen 7 dienende Umlenkräder geführt. Die einzelnen Halbkokillen 2, 2' werden beim Umlauf der Ketten 3, 3' entsprechend den Umlaufrichtungspfeilen 8 bzw. 8' in eine Formstrecke 9 eingeschwenkt, in der jeweils zwei Halbkokillen 2, 2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2, 2' zu einer parallelen und aneinanderliegenden Stellung zu erreichen, sind sogenannte Schließrollen 1o vorgesehen, die die in Produktionsrichtung 4 hinteren Enden der Halbkokillen 2, 2' beschleunigt zusammenführen.

In der Formstrecke 9 selber werden die aneinanderliegenden Halbkokillen 2, 2' mittels Führungsrollen 11, die in Führungsleisten 12 drehbar gelagert sind, gegeneinander gedrückt. Die Einlaufrollen 7 sind um Achszapfen 13 drehbar am Maschinentisch 1 angebracht. Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander wegbewegt werden können, bevor sie von den Rücklaufrollen 14 verschwenkt werden.

An der Oberseite der Halbkokillen 2,2' ist eine Verzahnung 16 ausgebildet, wobei die beiden Verzahnungen 16 der einander paarweise zugeordneten Halbkokillen 2, 2' miteinander fluchten, so daß von oben ein gemeinsames Antriebsritzel 17 in diese Verzahnung 16 eingreifen kann, das die Halbkokillen 2, 2' in der Formstrecke 9 als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehfest befestigt ist, die wiederum das Antriebsritzel 17 trägt. Die Welle 19 ist in einem Lagerbock 2o gelagert, der über Distanzprismen 21 gegenüber dem Maschinentisch abgestützt und mit letzterem mittels Schrauben 22 fest verbunden ist.

Auf der dargestellten Vorrichtung werden Kunststoff-Rohre 23, und zwar sogenannte Verbundrohre, mit unter anderem einer Querprofilierung, d.h. mit über deren Umfang umlaufenden Rillen 24 hergestellt.

Die Rohre 23 werden weiter unten noch genauer beschrieben. Hierzu ist ein Extruder vorgesehen, von dem nur der weiter unten noch genauer zu beschreibende Spritzkopf 25 angedeutet ist. Die bisher beschriebene Vorrichtung ist bekannt, und zwar beispielsweise aus der EP-A o o65 729 (entsprechend US 4 492 551) und aus der DE 4o 21 564 A1.

Der Spritzkopf 25 ist mittels Schrauben 26 an einem Anschlußteil 27 des nicht dargestellten Extruders befestigt. Er weist einen im wesentlichen ringförmigen Düsenkörper 28 auf, an dem alle wesentlichen Teile des Spritzkopfes befestigt sind. Dieser Düsenkörper weist konzentrisch zu einer gemeinsamen Mittel-Längs-Achse 29 des Spritzkopfes 25 einen in Produktionsrichtung 4 vorspringenden Ringbund 3o auf. In diesem Ringbund 3o ist mittels einer Innen-Gewinde-Verbindung 31 ein Innen-Düsendorn 32 befestigt. Auf dem Außenumfang des Ringbundes 3o ist mittels einer Außen-Gewinde-Verbindung 33 ein Außen-Düsendorn 34 befestigt. Schließlich ist wiederum konzentrisch zur Achse 29 noch ein Außendüsen-Mantel 35 mittels eines Justierrings 36 und mittels der Schrauben 26 am Düsenkörper 28 befestigt.

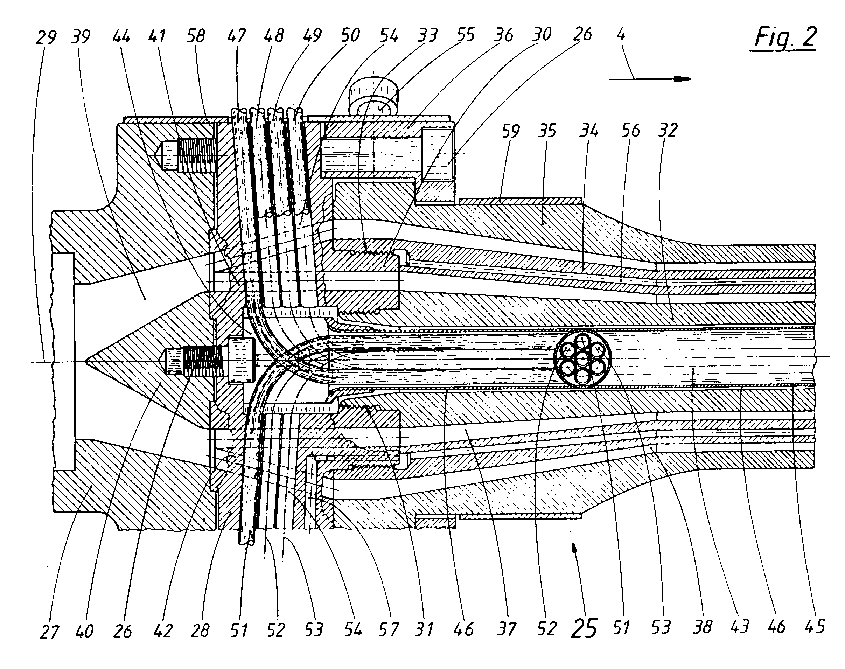

Der Innen-Düsendorn 32 und der Außen-Düsendorn 34 begrenzen zwischen sich einen Innen-Kanal 37, während der Außen-Düsendorn 34 und der Außendüsen-Mantel 35 einen Außen-Kanal 38 zwischen sich begrenzen. Der Innen-Kanal 37 und der Außen-Kanal 38 sind - wie Fig. 2 erkennen läßt - an einen vom Extruder kommenden Spritzkanal 39 angeschlossen. Um einen stetigen Fluß der vom Extruder kommenden Kunststoffschmelze in die Kanäle 37,38 zu erreichen, ist am Düsenkörper 28 ein in den Spritzkanal 39 entgegen der Produktionsrichtung 4 gerichteter Führungskegel 4o angebracht.

Im Düsenkörper 28 ist der Innen-Kanal 37 von sich radial erstreckenden Innen-Stegen 41 und der Außen-Kanal 38 von sich ebenfalls radial zur Achse 29 erstreckenden Außen-Stegen 42 durchsetzt, so daß der Düsenkörper 28 tatsächlich ein Teil ist. Wie Fig. 2 entnehmbar ist, erstreckt sich der Innen-Kanal 37 im Düsenkörper 28 durch den Ringbund 3o.

Der Innen-Düsendorn 32 ist mit einem konzentrisch zur Achse 29 verlaufenden Leitungs-Kanal 43 versehen, der in eine Kammer 44 im Düsenkörper 28 mündet. In diesem Leitungs-Kanal 43 ist ein Schutzrohr 45 konzentrisch zur Achse 29 angeordnet, das durch einen Luftspalt 46 zum Innen-Düsendorn 32 isoliert ist. Das Schutzrohr 45 selber besteht aus Stähl.

Durch das Schutzrohr 45 im Leitungs-Kanal 43 sind Versorgungs-Schläuche 47, 48, 49, 5o, 51, 52, 53 geführt. Diese sind radial von außen durch den Düsenkörper 28 in dessen Kammer 44 geführt, wozu im Düsenkörper 28 etwa radial verlaufende, bis in die Kammer 44 geführte Bohrungen 54 ausgebildet sind, die selbstverständlich die Außen-Stege 42 und die Innen-Stege 41 durchsetzen, damit die Schläuche 47 bis 53 nicht mit der in den Kanälen 37 bzw. 38 transportierten Schmelze in Berührung kommen. Die Schläuche 47 bis 53 sind aus hochwarmfestem Kunststoff, beispielsweise Polytetrafluorethylen, hergestellt.

Der Außendüsen-Mantel 35 wird mittels im Justierring 36 angebrachter, sich radial zur Achse 29 erstreckender Justierschrauben 55 ausgerichtet und festgelegt. Im Außen-Düsendorn 34 sind weiterhin Gaskanäle 56 ausgebildet, die sich in Produktionsrichtung 4 erstrecken und die an einen Zuführkanal 57 im Düsenkörper 28 angeschlossen sind, der sich etwa radial zur Achse 29 erstreckt und die Stege 42 durchsetzt. Der Spritzkopf 25 ist über einen größeren Teil seiner Länge mit Heizungen 58, 59 umgeben, um ein Abkühlen der vom Spritzkanal 39 kommenden, durch die Kanäle 37, 38 geführten Schmelze zu vermeiden.

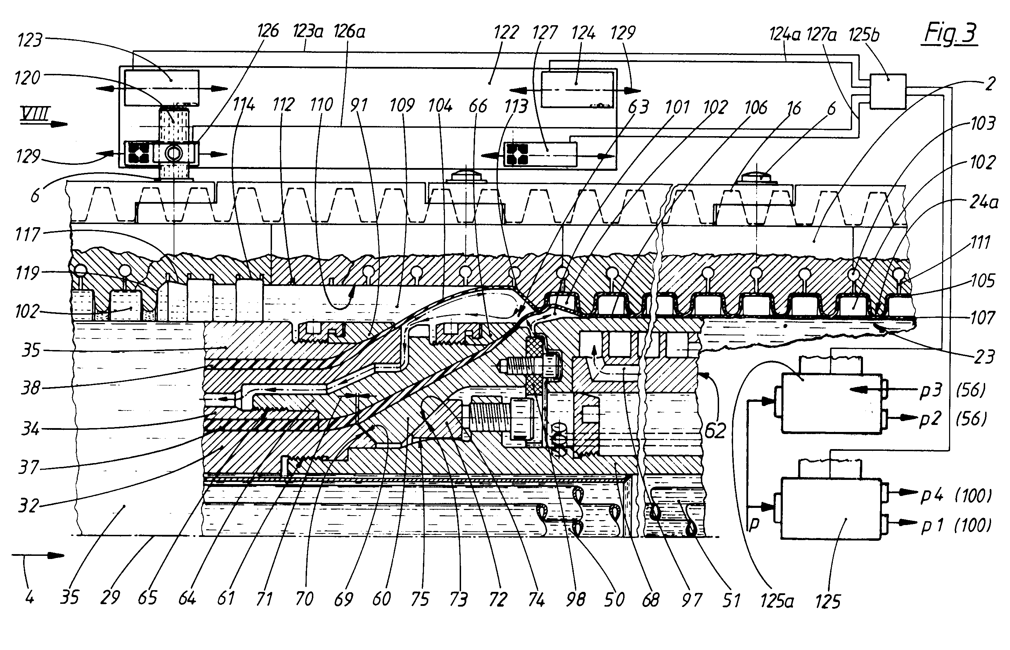

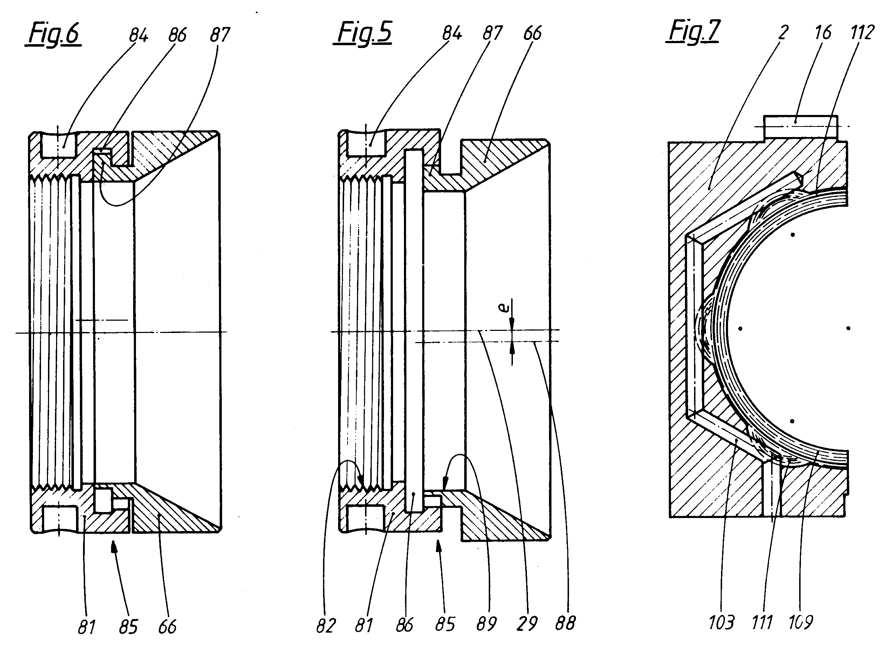

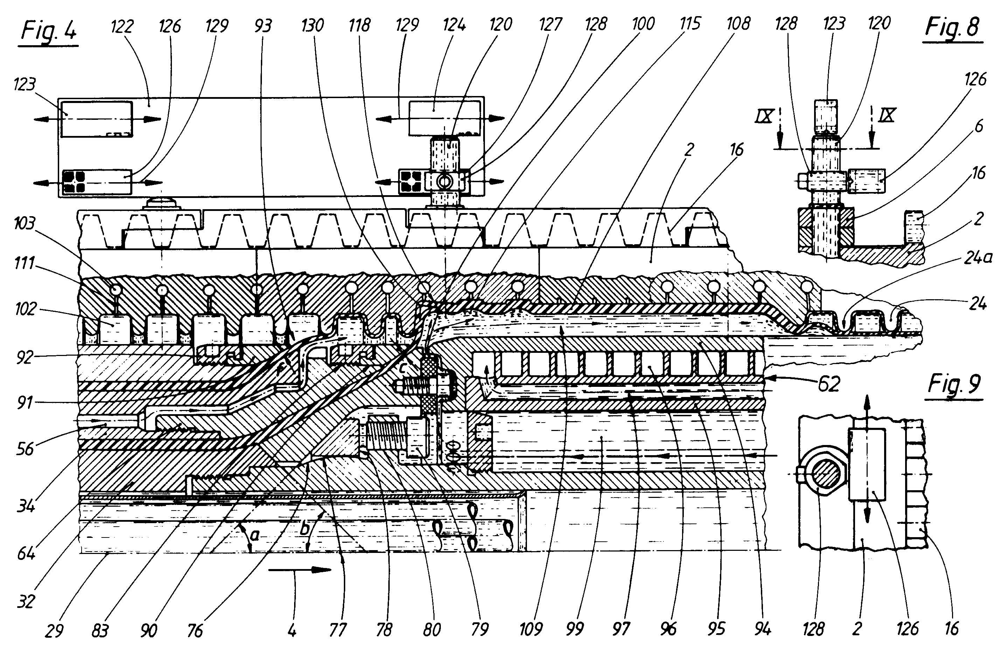

Die Ausgestaltung des Spritzkopfes 25 im Bereich seiner in Fig. 2 rechts dargestellten Düsen wird nachfolgend unter gleichzeitiger Bezugnahme auf Fig. 3 und 4 erläutert. Am Innen-Düsendorn 32 ist ein sich in Produktionsrichtung 4 kegelstumpfförmig erweiternder Innendorn-Teller 6o angeordnet, der einen als Temperierglocke 62 ausgebildeten Innendorn trägt. Dieser Innendorn-Teller 6o begrenzt auf der radial zur Achse 29 innenliegenden Seite eine den Innen-Kanal 37 beendende Innen-Düse 63. Am Außen-Düsendorn 34 ist ein Verlängerungsteil 64 mittels einer Gewindeverbindung 65 angebracht, das den Innendorn-Teller 6o in Produktionsrichtung 4 gesehen teilweise umgibt und so einen erweiterten Bereich des Innen-Kanals 37 auf der Außenseite umgibt, und zwar bis vor die Innen-Düse 63. Diese wird auf der radial außenliegenden Seite mittels eines Innen-Düsenrings 66 begrenzt, der auf dem Verlängerungsteil 64 angeordnet ist. Der Aufbau und die Verstellung wird weiter unten noch genauer beschrieben.

Der Innendorn-Teller 6o ist auf einem konzentrisch zur Achse 29 verlaufenden Tragrohr 68 angeordnet, das mittels einer Gewindeverbindung 61 mit dem Innen-Düsendorn 32 verbunden ist. Der Innendorn-Teller 6o ist mittels einer Kegelfläche 69 auf einer entsprechenden Kegelsitzfläche 7o am freien Ende des Innen-Düsendorns 32 abgestützt. Auf dieser Kegelsitzfläche 7o kann der Innendorn-Teller 60 relativ zur Achse 29 geringfügig radial verstellt werden, wodurch ein Justierabsatz 71 gebildet werden kann, der auf jeden Fall kleiner als 1 mm, in der Regel nicht größer als o,5 mm, ist. Zur Verstellung des Innendorn-Tellers 6o ist ein Justier-Kegelring 72 vorgesehen, der mit einer Kegelfläche 73 gegen eine Kegelsitzfläche 74 an der Innenseite des Innendorn-Tellers 6o anliegt. Während die Kegelfläche 69 und die Kegelsitzfiäche 7o sich in Produktionsrichtung 4 gesehen verjüngen, erweitern sich die Kegelfläche 73 und die zugeordnete Kegelsitzfläche 74 in Produktionsrichtung 4 gesehen. Der Justier-Kegelring 72 ist mit seiner zylindrischen Innenfläche 75 auf einer kugelringförmigen Führungsfläche 76 geführt, deren Mittelpunkt 77 in der Achse 29 liegt. Gegen eine der Kegelfläche 73 abgewandte Druckfläche 78 des Justier-Kegelrings 72 liegen Druck-Einstellschrauben 79 an, die in Widerlagern 8o verstellbar geführt sind, die wiederum mit dem Tragrohr 68 fest verbunden sind. Durch unterschiedliche Verstellung der Einstellschrauben 79, von denen nur eine dargestellt ist, kann der Justier-Kegelring 72 auf der kugelförmigen Führungsfläche 76 geringfügig verschwenkt werden, so daß der Neigungswinkel a seiner Kegelfläche 73 über den gesamten Umfang des Justier-Kegelrings 72 nicht identisch ist. Dadurch wird der Innendorn-Teller 6o an seiner Abstützung mittels der Kegelfläche 69 auf der Kegelsitzfiäche 7o exzentrisch zur Achse 29 verstellt. Damit dies im gewünschten Umfang erfolgt, beträgt die durchschnittliche Neigung der Kegelfläche 73 zur Achse 29 45°; gleichermaßen beträgt die Neigung b der Kegelsitzfläche 7o gegenüber der Achse 29 etwa 45° Die Kegelfläche 69 und die Kegelsitzfiäche 74 sind also unter 9o° gegeneinander geneigt.

Durch Verstellung des Innen-Düsenrings 66 in Richtung der Achse 29 wird die Grund-Weite c der Innen-Düse 63 und in geringem Maße eine über ihren Umfang unterschiedliche Weite c eingestellt. Durch die geschilderte radiale Verstellung des Innendorn-Tellers 6o wird die Weite c der Innen-Düse 63 in größerem Maße über ihren Umfang eingestellt. Hiermit kann also eingestellt werden, daß die Weite c der Innen-Düse 63 über ihren Umfang exakt gleich ist. Andererseits kann hiermit aber auch eingestellt werden, daß sie ungleich ist.

Der Innen-Düsenring 66 wird mittels einer Innen-Düsenringmutter 81 in Produktionsrichtung 4 zur Verstellung der Weite c der Innen-Düse 63 verstellt. Die Innen-Düsenringmutter 81 weist ein Innengewinde 82 auf, das sich auf einem Außengewinde 83 des Verlängerungsteils 64 abstützt. Die Gewinde 82, 83 sind konzentrisch zur Achse 29 ausgebildet. Die Innen-Düsenringmutter 81 weist radial zur Achse 29 verlaufende Öffnungen 84 auf, in die zum Verdrehen der Düsenringmutter 81 mit einem Werkzeug eingegriffen werden kann.

Die Innen-Düsenringmutter 81 ist mit dem Innen-Düsenring 66 mittels einer in Richtung der Achse 29 unverschiebbaren Drehverbindung 85 verbunden. Hierzu weist die Düsenringmutter 81 auf ihrer dem Innen-Düsenring 66 zugewandten Seite eine hinterschnittene Innennut 86 auf. Der Innen-Düsenring 66 weist einen Exzenter-Ringsteg 87 auf, dessen Mittelachse 88 um eine Exzentrizität e gegenüber der Achse 29 versetzt ist. Zur Montage wird der Innen-Düsenring 66 gegenüber der Innen-Düsenringmutter 81 um die Exzentrizität e verschoben und in diese hineingeschoben, so daß der Exzenter-Ringsteg 87 in der Innennut 86 zur Anlage kommt. Anschließend wird diese Einheit aus Innen-Düsenring 66 und Innen-Düsenringmutter 81 auf das Außengewinde 83 aufgeschraubt. Der Innen-Düsenring 66 ist mit seiner zylindrischen inneren Führungsfläche 89 auf einer ebenfalls zylindrischen äußeren Führungsfläche 90 des Verlängerungsteils 64 geführt. Beim Verstellen der Spaltweite c der Innen-Düse 63 sind nur verhältnismäßig geringe Kräfte auf den Innen-Düsenring 66 aufzubringen, da der Innen-Düsenring 66 bei einer Einstellung in Produktionsrichtung 4 nicht gegenüber dem Außendüsen-Mantel 35 gedreht werden muß. Insofern treten in diesem Bereich nur äußerst geringe Reibungskräfte auf. In der Innennut 86 befindet sich zur weitestgehenden Reduktion der Reibungskräfte in der Drehverbindung 85 ein hochtemperaturfestes Gleitmittel. Wie den Fig. 5, 6 zu entnehmen ist, können die Düsenringe 66 bzw. 91 in Produktionsrichtung 4 sehr kurz ausgebildet sein, und zwar deutlich kürzer als in den Fig. 3 und 4 dargestellt ist.

Auf dem Außendüsen-Mantel 35 ist ein Außen-Düsenring 91 mittels einer Außen-Düsenringmutter 92 in Richtung der Achse 29 verstellbar angeordnet. Die Ausgestaltung ist identisch derjenigen des Innen-Düsenrings 66 mit Innen-Düsenringmutter 81, so daß auf die vorige Beschreibung zur Innen-Düse 63 verwiesen werden darf. Der Außen-Düsenring 91 begrenzt auf der radial außenliegenden Seite eine Außen-Düse 93, deren Weite f durch die bereits geschilderte Verstellung in Richtung der Achse 29 verändert werden kann.

Die Gaskanäle 56 münden zwischen der Außen-Düse 93 und der in Produktionsrichtung 4 nachgeordneten Innen-Düse 63 aus dem Spritzkopf 25 aus.

Die Temperierglocke 62 weist einen in üblicher Weise ausgestalteten, im wesentlichen zylindrischen Kalibrierzylinder 94 auf. Dieser ist auf einem Temperierzylinder 95 angeordnet, der auf seinem Außenumfang mit einem Temperier-Kanal 96 versehen ist. Dieser wird über einen Temperiermittel-Vorlaufkanal 97 mit Temperier-Mittel versorgt, das über den Versorgungs-Schlauch 47 zugeführt und über den Versorgungs-Schlauch 51 abgeführt wird. Der Temperier-Kanal 96 ist üblicherweise als Heiz-Kanal ausgebildet, wobei diesem dann in Produktionsrichtung 4 noch ein Kühl-Kanal nachgeordnet ist, der nicht dargestellt ist. Zwischen der Temperierglocke 62 und dem Innendorn-Teller 60 ist eine Warmeisolierung 98 angeordnet.

Der Temperierzylinder 95 ist hohl ausgebildet und weist in seinem Innenraum einen das Tragrohr 68 umgebenden Gasraum 99 auf, der mit dem Versorgungs-Schlauch 50 verbunden ist. Der Gasraum 99 ist über einen in der Trennfläche zwischen dem Innendorn-Teller 60 und der Temperierglocke 62 ausgebildeten Gas-Spalt-Kanal 100 mit dem Formraum 101 verbunden, der zwischen den Halbkokillen 2 bzw. 2' und dem Spritzkopf 25 mit Temperierglocke 62 ausgebildet ist. Der Gas-Spalt-Kanal 100 mündet - in Produktionsrichtung 4 gesehen - unmittelbar hinter der Innen-Düse 63 in den Formraum 101.

Wie die Fig. 3 und 4 erkennen lassen, sind in den Halbkokillen, von denen in diesen Figuren nur die Halbkokillen 2 dargestellt sind, ringförmige Formausnehmungen 102 ausgebildet, die in bekannter Weise an Teilvakuum-Kanäle 103 angeschlossen sind.

Die vom Extruder durch den Spritzkanal 39 zugeführte Kunststoffschmelze strömt zum Teil durch den Außen-Kanal 38 zur Außen-Düse 93 aus der ein Außen-Schlauch 104 extrudiert wird, der sich unter Formung eines mit den Querrillen 24 versehenen Schlauches aufgrund des Teilvakuums in die Formausnehmungen 102 legt. Er bildet nach entsprechender Abkühlung und Erstarrung das gewellte Außenrohr 105 des Rohres 23.

Ein anderer Teil der Schmelze strömt durch den Innen-Kanal 37 zur Innen-Düse 63, aus der ein weiterer Schlauch, nämlich ein Innen-Schlauch 106 austritt, der auf den Kalibrierzylinder 94 gelangt. Dieser erweitert sich von der Innen-Düse 63 in Produktionsrichtung 4 leicht nach außen, bis der Innen-Schlauch 106 gegen die Wellentäler 24a des Außen-Schlauches 104 gelangt und hier mit diesen verschweißt wird. Der Innen-Schlauch 106 bildet nach Abkühlung unter Erstarrung das Innenrohr 107 des Verbundrohres 23.

Wie insbesondere aus den Fig. 3 und 4 ersichtlich ist, sind die Halbkokillen 2, 2' so ausgebildet, daß jeweils in vorgegebenen Abständen innerhalb des endlos hergestellten Verbundrohres 23 Rohr-Muffen 108 ausgebildet werden Hierzu ist in einem Paar von Halbkokillen 2, 2' eine im wesentlichen zylindrische Muffen-Ausnehmung 109 ausgebildet, die also eine glatte zylindrische Wand 110 aufweist. Damit auch in diesem Bereich der Außen-Schlauch 104 sich vollkommen glatt an die Wand 110 anlegt, sind die Teilvakuum-Kanäle 103 nicht nur - wie bei den Formausnehmungen 102 - mittels Vakuumschlitzen 111 mit den Formausnehmungen 102 verbunden, sondern mittels Vakuum-Ringschlitzen 112 mit der Muffen-Ausnehmung 109 verbunden, so daß über den gesamten Wandumfang Teilvakuum auf die Außenseite des Außen-Schlauches 104 ausgeübt wird. Die Einzelheiten sind Fig. 7 entnehmbar.

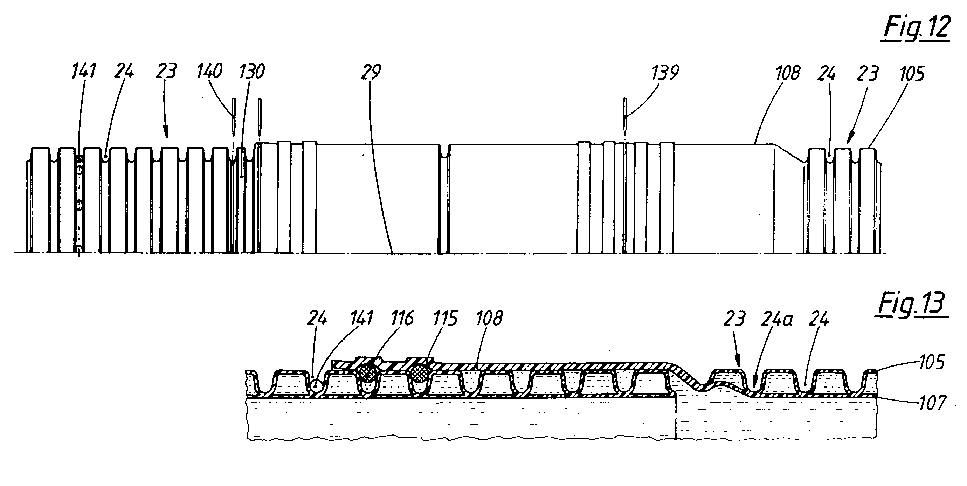

Zwischen der Muffen-Ausnehmung 109 und der in Produktionsrichtung 4 voreilenden Formausnehmung 102' ist ein Übergangsabschnitt 113 ausgebildet. Selbstverständlich kann sich die Muffen-Ausnehmung 109 auch über mehrere hintereinander angeordnete Halbkokillen 2, 2' erstrecken. Am - in Produktionsrichtung 4 gesehen - hinteren Ende der Muffen-Ausnehmung 109 sind Formrillen 114 ausgebildet, in denen in der Rohr-Muffe 108 Innennuten 115 zur Aufnahme jeweils eines Dichtungsringes 116 (Fig. 13) ausgebildet werden. Weiterhin schließt ein kegelstumpfförmiger Formabschnitt 117 an, in dem ein sich nach außen öffnendes Einführende 118 der Muffe ausgeformt wird. Daran schließt sich wiederum ein Übergangsabschnitt 119 an, der zur nächsten - in Produktionsrichtung 4 nacheilenden - Formausnehmung 102 führt.

In einer räumiich festen Zuordnung zu der Muffen-Ausnehmung 109 ist durch eine stabförmige Verlängerung eines Anlenkbolzens 6 ein Schaltglied 120 gebildet, das - in noch zu schildernder Weise - verschiedene Ventile ansteuert, um im Raum zwischen Außen-Schlauch 104 und Innen-Schlauch 106 und/oder innerhalb des Innen-Schlauches 106 unterschiedliche Druckverhältnisse zu schaffen. Hierzu ist auf dem Lagerbock 20 eine Montagebrücke 121 befestigt, die einen Montagearm 122 aufweist, der sich oberhalb der Halbkokillen 2' in Produktionsrichtung 4 erstreckt. Auf diesem Montagearm 122 sind von dem Schaltglied 120 zu betätigende Schalter 123, 124 angebracht, mittels derer Magnetventile 125, 125a angesteuert werden können. Weiterhin werden mittels des Schaltgliedes 120 auf dem Montagearm 122 angebrachte Schalter 126, 127 betätigt, mittels derer der nicht dargestellte Antriebsmotor auf unterschiedliche Geschwindigkeiten geschaltet werden kann. Die Schalter 123, 124, 126, 127 werden - wie aus den Fig. 3, 4, 8 hervorgeht - berührungslos geschaltet, wobei die berührungslose Betätigung der Schalter 126, 127 mittels eines Schaltnockens 128 erfolgt. Die Schalter 123, 124, 126, 127 sind in Produktionsrichtung 4 auf dem Montagearm 122 einstellbar angebracht, was durch Pfeile 129 angedeutet ist. Die Schalter 123, 124, 126, 127 sind über Leitungen 123a, 124a, 126a, 127a mit einer Steuereinrichtung 125b verbunden, die die von den Schaltern 123, 124, 126, 127 kommenden Signale verarbeitet und entsprechende Steuersignale auf die Magnetventile 125, 125a gibt. Die Magnetventile 125, 125a werden von einer nicht dargestellten Druckquelle mit Druckluft mit einem Druck p versorgt, der höher ist als die nachfolgend noch zu erläuternden Ausgangsdrücke der Magnetventile 125, 125a.

Über das Magnetventil 125 wird der Druck im Gas-Spalt-Kanal 100 und damit innerhalb des Innen-Schlauches 106 angesteuert, während durch das Magnetventil 125a der Druck in den Gaskanälen 56 und damit im Raum zwischen Außen-Schlauch 104 und Innen-Schlauch 106 angesteuert wird.

Während der Produktion des normalen gewellten Verbundrohres 23 in der in Fig. 3 rechts dargestellten Form wird durch das Magnetventil 125 ein Druck p1 von ca. 1,05 bis 1,15 bar, also ein geringer Überdruck von 0,05 bis 0,15 bar, auf den Gas-Spalt-Kanal 100 gegeben. Gleichzeitig wird auf die Gaskanäle 56 ein Druck p2 von ca. 1,2 bis 1,3 bar, also ein ebenfalls geringer aber höherer Überdruck von 0,2 bis 0,3 bar, gegeben. Durch den geringen Überdruck innerhalb des Innen-Schlauches 106 wird verhindert, daß der Innen-Schlauch 106 an dem Kalibrierzylinder 94 festklebt, bevor er mit dem Außen-Schlauch 104 verschweißt wird. Durch den etwas höheren Überdruck zwischen Außen-Schlauch 104 und Innen-Schlauch 106 wird sichergestellt, daß beim Abkühlen der an den Wellentälern 24a miteinander verschweißten Schläuche 104, 106 zum gewellten Verbundrohr 23 der Innen-Schlauch 106 nicht nach außen ausgewölbt wird. Beim Abkühlen der Schläuche 104, 106 stellt sich exakt Atmosphärendruck ein.

Wenn in dem in Fig. 3 dargestellten Augenblick der Übergangs-Abschnitt 113 in den Bereich des Gas-Spalt-Kanals 100 kommt, gelangt das Schaltglied 120 zum - in Produktionsrichtung 4 gesehen - ersten Schalter 126, der die Vorschubgeschwindigkeit der durch die Halbkokillen 2, 2' gebildeten Form reduziert, so daß - bei gleicher Leistung des Extruders - der Innen-Düse 63 und der Außen-Düse 93 mehr Schmelze pro Längeneinheit des zu erzeugenden Verbundrohres 23 zugeführt wird. Dies führt dazu, daß der Außen-Schlauch 104 und der Innen-Schlauch 106 dicker werden, wie insbesondere Fig. 4 entnehmbar ist. Gleichzeitig wird das Magnetventil 125a mit der Atmospähre verbunden, so daß im Raum zwischen Außen-Schlauch 104 und Innen-Schlauch 106 Atmosphärendruck p3 herrscht und insbesondere die Luft nach außen entweichen kann. Gleichzeitig wird das Magnetventil 125 umgeschaltet von p1 auf einen höheren Druck p4 von ca. 1,2 bis 1,45 bar, also auf einen Überdruck von ca. 0,2 bis 0,45 bar. Hierdurch wird der Innen-Schlauch 106 nach außen gegen den Außen-Schlauch 104 gedrückt. Dieser wird ohnehin durch das Teil-Vakuum von etwa 0,7 bis 0,3 bar in den Vakuum-Ringschlitzen 112 gegen die Wand 110 der Muffen-Ausnehmung 109 gezogen. Von innen drückt der durch den Spalt 100 eingedrückte Überdruck, so daß Außen-Schlauch 104 und Innen-Schlauch 106 an der Wand 110 der Muffen-Ausnehmung 109 anliegend vollflächig miteinander verschweißt werden Die Gesamtwanddicke im Bereich der Rohr-Muffe 108 ist größer als im gewellten Bereich, damit die Steifigkeit und Druckfestigkeit der Rohr-Muffe 108 gleich groß ist wie im gewellten Bereich. Am Ende der Herstellung der Muffe gemäß Fig. 4 gelangt das Schaltglied 120 zuerst zu dem Schalter 127, der den Antriebsmotor wieder auf eine höhere Geschwindigkeit umschaltet, so daß pro Längeneinheit des produzierten Verbund-Rohres 23 wieder weniger Schmelze zugeführt wird. Unmittelbar danach wird der Schalter 124 betätigt, der die Magnetventile 125 und 125a wieder auf die vorstehend geschilderten Bedingungen mit den Drücken p1 und p2 zurückschaltet. Das im Übergangsabschnitt 119 erzeugte Rohrstück 130 wird herausgeschnitten.

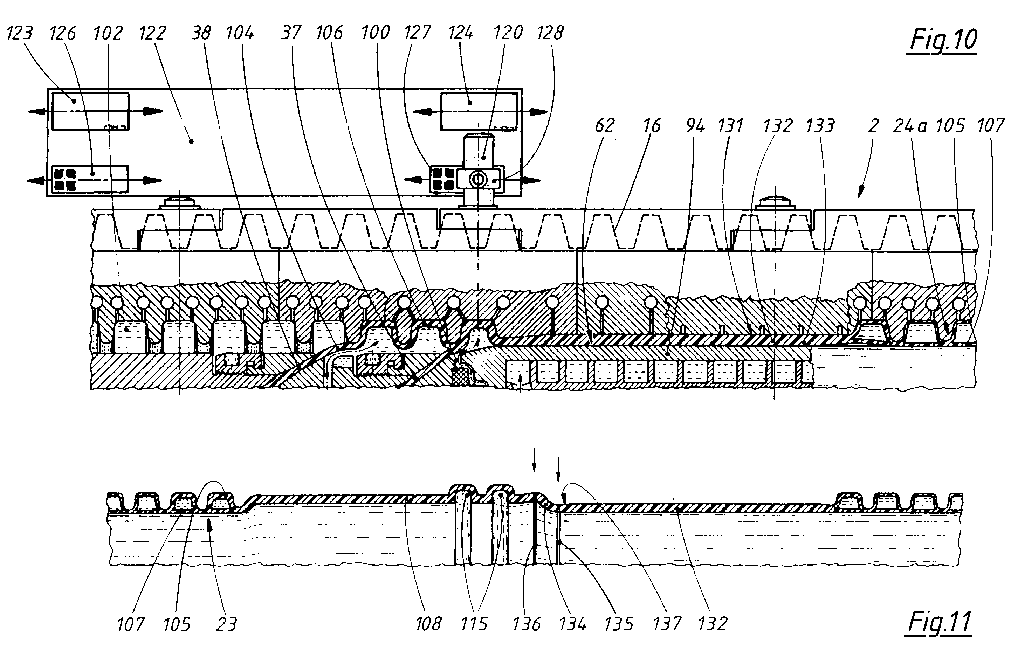

In Fig. 10 ist eine Variante dargestellt, bei der anstelle einer Rohr-Muffe ein Spitzende hergestellt wird, das also einen geringeren Außendurchmesser hat und zum Einschieben in eine Muffe oder ein sonstiges Rohrverbindungselement ausgebildet ist. In diesem Fall ist anstelle einer Muffen-Ausnehmung eine Spitzende-Ausnehmung 131 in der jeweiligen Halbkokille 2 bzw. 2' vorgesehen, deren Durchmesser im Vergleich zum Durchmesser des Kalibrierzylinders 94 nur um die doppelte Wanddicke des zu erzeugenden Spitzendes 132 größer ist. Hierbei ist dann, wenn die Spitzende-Ausnehmung 131 über den Gas-Spalt-Kanal 100 läuft, durch den Schalter 123 das Magnetventil 125 in der Weise zu schalten, daß es mit der Atmosphäre verbunden ist. Das Magnetventil 125a wird gleichzeitig - wie bei der Herstellung der Muffe - so geschaltet, daß es zur Atmosphäre hin offen ist, so daß auch hier die Luft aus dem Raum zwischen Außen-Schlauch 104 und Innen-Schlauch 106 nach außen herausgedrückt werden kann. Das Verschweißen von Außen-Schlauch 104 und Innen-Schlauch 106 erfolgt hierbei nur durch das Zusammenpressen der beiden Schläuche zwischen dem Kalibrierzylinder 94 und der Wand 133 der Spitzende-Ausnehmung 131. Auch hier ist die Geschwindigkeit der Form durch entsprechende Ansteuerung des Antriebsmotors über den Schalter 126 zurückgenommen worden, so daß mehr Schmelze pro Längeneinheit des zu erzeugenden Rohres in das Spitzende 132 gelangt, so daß dessen Wanddicke größer ist als die Summe der Wanddicken von Außenrohr 105 und Innenrohr 107.

Aus Fig. 11 ist ersichtlich, wie fortlaufend in einem Rohrstrang ein Verbundrohr 23 hergestellt wird, das ein Spitzende 132 und - unmittelbar an dieses anschließend - eine Rohr-Muffe 108 aufweist. Das Rohrstück 134 am Übergang vom Spitzende 132 zur Rohr-Muffe 108 wird als Abfall durch zwei Sägeschnitte 135, 136 herausgeschnitten. Wie Fig. 11 erkennen läßt, weist das Spitzende 132 an seinem freien Ende einen sich leicht verjüngenden Einführkonus 137 auf. Zur fortlaufenden Herstellung eines Verbundrohres 23 mit einem Spitzende 132 einerseits und einer Rohr-Muffe 108 andererseits muß noch ein zusätzlicher, in der Zeichnung nicht dargestellter Schalter vorgesehen sein, durch den die Magnetventile 125, 125a beim Übegang vom Spitzende 132 auf die Rohr-Muffe 108 die Druckbedingungen in der Weise ändern, wie sie oben bereits dargestellt wurden.

In Fig. 12 ist ein Verbundrohr 23 dargestellt, das einerseits eine Rohr-Muffe 108 aufweist und das - vor dem erneuten Übergang in das gewellte Verbundrohr 23 - noch eine zusätzliche Doppel-Muffe 138 aufweist. Diese Doppel-Muffe 138 wird durch Sägeschnitte 139, 140 herausgeschnitten und ist als Zubehörteil, also zum Verbinden zweier Verbundrohre, die keine angeformte Rohr-Muffe 108 aufweisen, geeignet. Auch hier wird naturgemäß ein Rohrstück 130 als Abfall herausgetrennt.

In Fig. 12 und 13 ist dargestellt, daß in einer Querrille 24 warzenartige Vorsprünge 141 ausgebildet sind, durch die markiert wird, wie weit ein Verbundrohr 23 in eine Rohr-Muffe 108 einzuschieben ist, damit eine feste Verbindung im Bereich der Rohr-Muffe sichergestellt ist.

## Patentansprüche

1. Verfahren zur fortlaufenden Herstellung eines aus einem glatten Innenrohr (107) und einem mit diesem verschweißten mit Querrillen (24) versehenen Außenrohr (105) bestehenden Verbundrohres (23) mit einer Rohr-Muffe (108) mit folgenden Verfahrensschritten:
- Es wird ein Außen-Schlauch (104) extrudiert;
- der Außen-Schlauch (104) wird durch von außen aufgebrachtes Teil-Vakuum mit einer Wellung mit Querrillen (24) versehen;
- es wird ein Innen-Schlauch (106) in den Außen-Schlauch (104) extrudiert;
- der Innen-Schlauch (106) wird gegen die Wellentäler (24a) des Außen-Schlauches (104) gedrückt und dort mit dem Außen-Schlauch (104) verschweißt;
- der Außen-Schlauch (104) wird in vorgegebenen Abständen unter Aufbringung des Teil-Vakuums von außen zu einer im wesentlichen glattwandigen etwa zylindrischen Rohr-Muffe (108) aufgeweitet,
gekennzeichnet durch folgende Merkmale:
- Nach dem Extrudieren des Innen-Schlauches (106) in den Außen-Schlauch (104) und vor dem Andrücken des Innen-Schlauches (106) gegen die Wellentäler (24a) des Außen-Schlauches (104) wird in den Bereich zwischen Außen-Schlauch (104) und Innen-Schlauch (106) Gas mit einem über Armosphärendruck (p3) liegenden Druck (p2) eingeblasen;
- nach dem Aufweiten des Außen-Schlauches (104) zu einer im wesentlichen glattwandigen etwa zylindrischen Rohr-Muffe (108) wird der Bereich zwischen Außen-Schlauch (104) und Innen-Schlauch (106) entlüftet; und
- anschließend wird der Innen-Schlauch (106) von innen mit Gas mit einem Druck (p4) über Atmosphärendruck (p3) beaufschlagt und unter Aufweitung vollflächig gegen den aufgeweiteten Bereich des Außen-Schlauches (104) gedrückt.

2. Verfahren nach Anspruch 1, dadurch gekennzeichnet, daß während der Aufweitung des Außen-Schlauches (104) und des Innen-Schlauches (106) zur Rohr-Muffe (108) der Außen-Schlauch (104) und der Innen-Schlauch (106) dickwandiger extrudiert werden als während der Herstellung des mit Querrillen (24) versehenen Verbundrohres (23).

3. Vorrichtung zur Durchführung des Verfahrens nach Anspruch 1 oder 2,
- wobei mit ringförmigen Formausnehmungen (102) versehene, sich auf einer Formstrecke (9) jeweils paarweise zu einer Form mit einer MittelLängs-Achse (29) ergänzende Halbkokillen (2, 2') auf einem Maschinentisch (1) im Kreislauf und in Produktionsrichtung (4) geführt angeordnet sind,
- wobei die Formausnehmungen (102) an in den Halbkokillen (2, 2') ausgebildete Teil-Vakuum-Kanäle (103) angeschlossen sind,
- wobei der Formstrecke (9) ein Spritzkopf (25) eines Extruders vorgeordnet ist,
- wobei der Spritzkopf (25) mit einer Außen-Düse (93) zur Extrusion eines Außen-Schlauches (104) und in Produktionsrichtung (4) nachgeordnet mit einer Innen-Düse (63) zur Extrusion eines Innen-Schlauches (106) und an seinem in Produktionsrichtung (4) hintenliegenden Ende mit einer Temperierglocke (62) versehen ist,
- wobei zwischen Außen-Düse (93) und Innen-Düse (63) aus dem Spritzkopf (25) mindestens ein Gaskanal (56) ausmündet, und
- wobei zwischen Innen-Düse (63) und Temperierglocke (62) ein zusätzlicher Gas-Kanal (100) aus dem Spritzkopf (25) ausmündet,
dadurch gekennzeichnet,
- daß mindestens ein Paar Halbkokillen (2, 2') mit einer Muffen-Ausnehmung (109) versehen ist,
- daß der mindestens eine Gaskanal (56) an ein Ventil (125a) angeschlossen ist, das auf Gas mit Druck (p2) über Atmosphärendruck (p3) und auf Entlüftung umschaltbar ist,
- daß der zusätzliche Gas-Kanal (100) an ein Ventil (125) angeschlossen ist, das auf Gas mit Druck (p4) über Atmosphärendruck schaltbar ist, und
- daß Schalter (123, 124) vorgesehen sind, die in Abhängigkeit von der Stellung der Muffen-Ausnehmung (109) zu dem zusätzlichen Gas-Kanal (100) und/oder dem mindestens einen Gaskanal (56) die Ventile (125a, 125) schalten.

4. Vorrichtung nach Anspruch 3, dadurch gekennzeichnet, daß die Schalter (123, 124) oberhalb der Formstrecke (9) angeordnet sind und von mindestens einem mit einer Halbkokille (2) verbundenen Schaltglied (120) betätigbar sind.

5. Vorrichtung nach Anspruch 3 oder 4, dadurch gekennzeichnet, daß den Schaltern (123, 124) zur Betätigung der Ventile (125a, 125) Schalter (126, 127) zur Umschaltung eines Antriebsmotors für die Halbkokillen (2, 2') zugeordnet sind.

6. Vorrichtung nach einem der Ansprüche 3 bis 5, dadurch gekennzeichnet, daß mindestens ein Paar Halbkokillen (2, 2') mit einer Spitzende-Ausnehmung (131) zur Erzeugung eines Spitzendes (132) an dem Verbundrohr (23) versehen ist.

7. Vorrichtung nach Anspruch 3, dadurch gekennzeichnet, daß die Außen-Düse (93) und die Innen-Düse (63) in ihrer Weite (f, c) einstellbar sind.

8. Vorrichtung nach Anspruch 7, dadurch gekennzeichnet, daß die Außen-Düse (93) und/oder die Innen-Düse (63) einen Düsenring (91, 66) aufweisen, der auf dem Spritzkopf (25) in Produktionsrichtung (4) verschiebbar geführt ist und mittels einer in ein Außengewinde (83) am Spritzkopf (25) eingreifender Düsenringmutter (92, 81) in Produktionsrichtung (4) verstellbar ist.

9. Vorrichtung nach Anspruch 8, dadurch gekennzeichnet, daß die Düsenringmutter (81) und der Düsenring (66) mittels einer Drehverbindung (85) miteinander verbunden sind.

10. Vorrichtung nach Anspruch 9, dadurch gekennzeichnet, daß die Drehverbindung (85) durch eine Innennut (86) und einen in diese eingreifenden Exzenter-Ringsteg (87) gebildet ist.

## Claims

1. Method for the continuous manufacture of a compound pipe (23) with a pipe socket (108), the compound pipe (23) consisting of a smooth internal pipe (107) and an external pipe (105) provided with transverse grooves (24) and welded together with the internal pipe (107), comprising the following steps:
- An external tube (104) is extruded;
- by a partial vacuum applied from the outside, the external tube (104) is provided with a corrugation with transverse grooves (24);
- an internal tube (106) is extruded into the external tube (104);
- the internal tube (106) is pressed against the corrugation troughs (24a) of the external tube (104), where it is welded together with the external tube (104);
- at predetermined intervals the external tube (104) is widened by a partial vacuum applied from the outside to form an essentially smooth-walled, about cylindrical pipe socket (108);
characterized by the following features:
- After the extrusion of the internal tube (106) into the external tube (104) and prior to the internal tube (106) being pressed against the corrugation troughs (24a) of the external tube (104), gas is blown into the space between the external tube (104) and the internal tube (106) at a pressure (p2) above atmospheric (p3);
- after the widening of the external tube (104) to form an essentially smooth-walled, about cylindrical pipe socket (108), the space between the external tube (104) and the internal tube (106) is vented; and
- subsequently, the internal tube (106) is acted upon from the inside by gas at a pressure (p4) above atmospheric (p3) and while being widened is forced with its full surface against the expanded portion of the external tube (104).

2. Method according to claim 2, characterized in that, while the external tube (104) and the internal tube (106) are widened to form the pipe socket (108), the external tube (104) and the internal tube (106) are extruded to have thicker walls than during the manufacture of the compound pipe (23) provided with transverse grooves (24).

3. Apparatus for putting the method according to claim 1 or 2 into practice,
- wherein half shells (2, 2'), which are provided with annular mold recesses (102), and of which two at a time combine as a pair on a molding path (9) to form a mold with a central longitudinal axis (29), are arranged on a machine bed (1) to be guided in a circuit and in the direction (4) of production,
- wherein the mold recesses (102) are connected to partial vacuum channels (103) formed in the half shells (2, 2'),
- wherein an injection head (25) of an extruder is arranged upstream of the molding path (9),
- wherein the injection head (25) is provided with an external nozzle (93) for the extrusion of an external tube (104) and, downstream in the direction (4) of production, with an internal nozzle (63) for the extrusion of an internal tube (106) and, at its rear end seen in the direction (4) of production, with a temperature-regulating bell (62),
- wherein at least one gas duct (56) opens out of the injection head (25) between the external nozzle (93) and the internal nozzle (63), and
- wherein a gas duct (100) opens out of the injection head (25) between the internal nozzle (63) and the temperature-regulating bell (62),
characterized
- in that at least one pair of half shells (2, 2') is provided with a socket recess (109),
- in that the at least one gas duct (56) is connected to a valve (125a), which can be changed over to gas at a pressure (p2) above atmospheric (p3) and to venting,
- in that the gas duct (100) is connected to a valve (125) which can be changed over to gas at a pressure (p4) above atmospheric, and
- in that switches (123, 124) are provided which trigger the valves (125a, 125) in dependence on the position of the socket recess (109) relative to the gas duct (100) and/or the at least one gas duct (56).

4. Apparatus according to claim 3, characterized in that the switches (123, 124) are arranged above the molding path (9) and are actuatable by at least one control member (120) connected with a half shell (2).

5. Apparatus according to claim 3 or 4, characterized in that the switches (123, 124) for the triggering of the valves (125a, 125) are associated with switches (126, 127) for the change-over of a drive motor for the half shells (2, 2').

6. Apparatus according to one of the claims 3 to 5, characterized in that at least one pair of half shells (2, 2') is provided with a spigot recess (131) for the production of a spigot (132) on the compound pipe (23).

7. Apparatus according to claim 3, characterized in that the external nozzle (93) and the internal nozzle (63) can be adjusted in width (f, c).

8. Apparatus according to claim 7, characterized in that the external nozzle (93) and/or the internal nozzle (63) have a nozzle ring (91, 66), which is guided on the injection head (25) displaceably in the direction (4) of production and which is adjustable in the direction (4) of production by means of a nut (92, 81) of the nozzle ring engaging with an exterior thread (83) on the injection head (25).

9. Apparatus according to claim 8, characterized in that the nut (81) of the nozzle ring and the nozzle ring (66) are connected with each other by a rotary connection (85).

10. Apparatus according to claim 9, characterized in that the rotary connection (85) is formed by an internal groove (86) and an eccentric annular web (87) engaging with the latter.

## Revendications

1. Procédé destiné à la fabrication en continu d'un tube composite (23) comportant un manchon de tube (108) et constitué d'un tube intérieur lisse (107) et d'un tube extérieur (105) soudé au précédent et pourvu de cannelures transversales (24), le procédé présentant les étapes suivantes:
- un tuyau extérieur (104) est extrudé;
- le tuyau extérieur (104) est pourvu d'une ondulation à cannelures transversales (24), au moyen d'un vide partiel appliqué par l'extérieur;
- un tuyau intérieur (106) est extrudé dans le tuyau extérieur (104);
- le tuyau intérieur (106) est pressé contre les creux d'onde (24a) du tuyau extérieur (104) et est soudé au tuyau extérieur (104) en cet endroit;
- le tuyau extérieur (104) est évasé, à des intervalles prédéterminés, par l'application du vide partiel, pour former un manchon de tube (108) sensiblement cylindrique et sensiblement à paroi lisse,
caractérisé par les particularités suivantes:
- après extrusion du tuyau intérieur (106) dans le tuyau extérieur (104), et avant que le tuyau intérieur (106) ne soit pressé contre les creux d'onde (24a) du tuyau extérieur (104), du gaz est insufflé dans la zone entre le tuyau extérieur (104) et le tuyau intérieur (106), à une pression (p2) supérieure à la pression atmosphérique (p3);
- après l'évasement du tuyau extérieur (104) en un manchon de tube (108) sensiblement cylindrique et sensiblement à paroi lisse, la zone entre le tuyau extérieur (104) et le tuyau intérieur (106) est purgée; et
- le tuyau intérieur (106) est ensuite sollicité par l'intérieur avec un gaz à une pression (p4) supérieure à la pression atmosphérique (p3), et en s'évasant, est pressé sur toute sa surface, contre la zone évasée du tuyau extérieur (104).

2. Procédé selon la revendication 1, caractérisé en ce que durant l'évasement du tuyau extérieur (104) et du tuyau intérieur (106) pour former le manchon de tube (108), le tuyau extérieur (104) et le tuyau intérieur (106) sont extrudés avec une paroi plus épaisse, que durant la fabrication du tube composite (23) pourvu de cannelures transversales (24).

3. Dispositif destiné à la mise en oeuvre du procédé selon la revendication 1 ou 2,
- des demi-coquilles (2, 2') qui sont pourvues d'évidements de moulage (102) de forme annulaire, et qui se complètent respectivement par paires le long d'un parcours de moulage (9) en un moule présentant un axe longitudinal central (29), étant disposées en révolution sur une table-machine (1) et en y étant guidées dans la direction de production (4),
- les évidements de moulage (102) étant raccordés à des canaux de vide partiel (103) réalisés dans les demi-coquilles (2, 2'),
- une tête d'extrusion (25) d'une extrudeuse étant disposée en amont du parcours de moulage (9),
- la tête d'extrusion (25) étant pourvue d'une filière extérieure (93) pour l'extrusion d'un tuyau extérieur (104), et disposée en aval en se référant à la direction de production (4), d'une filière intérieure (63) pour l'extrusion d'un tuyau intérieur (106), ainsi que d'une cloche d'équilibrage de température (62) située à son extrémité arrière dans la direction de production (4),
- au moins un canal de gaz (56) débouchant de la tête d'extrusion (25), entre la filière extérieure (93) et la filière intérieure (63), et
- au moins un canal de gaz supplémentaire (100) débouchant de la tête d'extrusion (25), entre la filière intérieure (63) et la cloche d'équilibrage de température (62),
caractérisé
- en ce qu'au moins une paire de demi-coquilles (2, 2') est pourvue d'un évidement de manchon de tube (109),
- en ce que ledit au moins un canal de gaz (56) est raccordé à une soupape (125a) pouvant être commutée dans une position d'alimentation en gaz à pression (p2) supérieure à la pression atmosphérique (p3), et dans une position de purge,
- en ce que le canal de gaz supplémentaire (100) est raccordé à une soupape (125) qui peut être commutée dans une position d'alimentation en gaz à pression (p4) supérieure à la pression atmosphérique, et
- en ce que sont prévus des commutateurs (123, 124) qui, en fonction de la position de l'évidement de manchon de tube (109) par rapport au canal de gaz supplémentaire (100) et/ou au dit au moins un canal de gaz (56), commutent les soupapes (125a, 125).

4. Dispositif selon la revendication 3, caractérisé en ce que les commutateurs (123, 124) sont disposés au-dessus du parcours de moulage (9) et peuvent être actionnés par au moins un organe de commutation (120) relié à une demi-coquille (2).

5. Dispositif selon la revendication 3 ou 4, caractérisé en ce qu'aux commutateurs (123, 124) destinés à l'actionnnement des soupapes (125a, 125), sont associés des commutateurs (126, 127) destinés à l'inversion d'un moteur d'entraînement pour les demi-coquilles (2, 2').

6. Dispositif selon l'une des revendications 3 à 5, caractérisé en ce qu'au moins une paire de demi-coquilles (2, 2') est pourvue d'un évidement d'extrémité en pointe (131) destiné à produire une extrémité en pointe (132) sur le tube composite (23).

7. Dispositif selon la revendication 3, caractérisé en ce que la filière extérieure (93) et la filière intérieure (63) sont réglables quant à leur largeur (f, c).

8. Dispositif selon la revendication 7, caractérisé en ce que la filière extérieure (93) et/ou la filière intérieure (63) présentent une bague de filière ((91, 66) qui est guidée de manière coulissante sur la tête d'extrusion (25), dans la direction de production (4), et qui peut être déplacée dans la direction de production (4), au moyen d'un écrou de bague de filière (92, 81) en prise avec un filetage extérieur (83) sur la tête d'extrusion (25).

9. Dispositif selon la revendication 8, caractérisé en ce que l'écrou de bague de filière (81) et la bague de filière (66) sont reliés l'un à l'autre au moyen d'une liaison de rotation (85).

10. Dispositif selon la revendication 9, caractérisé en ce que la liaison de rotation (85) est formée par une rainure intérieure (86) et une nervure annulaire excentrique (87) s'engageant dans celle-ci.
